# EUROPÄISCHE PATENTSCHRIFT

(11) **EP 1 296 053 B1**
(45) Veröffentlichungstag und Bekanntmachung des Hinweises auf die Patenterteilung: **26.03.2008**
(21) Anmeldenummer: 02102273.6
(22) Anmeldetag: 02.09.2002
(51) Int. Cl.: F02M 45/02, F02M 61/16

(54) **Verfahren zum direkten Einspritzen von Kraftstoff in Form von zwei Einspritzungen mit unterschiedlichen Einspritzwinkeln und eine Steuereinrichtung zum Einspritzen**
Process for direct fuel injection in the form of two injections with different injection angles and injection control device
Procédé d'injection directe de combustible sous forme de deux injections ayant des angles d'injection différents et dispositif de commande d'injection

(30) Priorität: 25.09.2001 DE 10147171
(43) Veröffentlichungstag der Anmeldung: 26.03.2003
(73) Patentinhaber: SIEMENS AKTIENGESELLSCHAFT, 80333 München (DE)
(72) Erfinder: Zhang, Hong, Dr., 93105, Tegernheim (DE)

(56) Entgegenhaltungen:
- EP-A- 0 661 432
- EP-A- 0 947 684
- DE-A1- 4 423 241
- DE-A1- 19 515 508
- DE-C1- 19 642 653
- ANDO H ET AL: "MITSUBISHI GDI ENGINE STRATEGIES TO MEET THE EUROPEAN REQUIREMENTS" AVL TAGUNG MOTOR UND UMWELT - CONFERENCE ENGINE AND ENVIRONMENT, XX, XX, 1997, Seiten 55,57-70, XP000669906

## Beschreibung

Die Erfindung betrifft ein Verfahren zum direkten Einspritzen von Kraftstoff mit einem Einspritzventil in einen Brennraum einer Brennkraftmaschine gemäß dem Oberbegriff des Patentanspruchs 1. Weiterhin betrifft die Erfindung eine Steuereinrichtung zum Steuern eines Einspritzventils zum direkten Einspritzen von Kraftstoff in einen Brennraum einer Brennkraftmaschine gemäß dem Oberbegriff des Patentanspruchs 11.

Neuere Entwicklungen von Brennkraftmaschinen für Kraftfahrzeuge weisen eine Direkteinspritzung auch bei benzinbetriebenen Brennkraftmaschinen auf, die zum Zünden des eingespritzten Kraftstoffes eine Zündkerze aufweisen. Auch im Bereich der direkt eingespritzten Benzinbrennkraftmaschinen ist ein großes Potenzial zur Reduktion des Kraftstoffverbrauches bei zugleich relativ geringem Schadstoffausstoß gegeben. Im Gegensatz zur Saugrohreinspritzung wird bei einer Direkteinspritzung Kraftstoff mit hohem Druck direkt in den Verbrennungsraum eingespritzt. Eine Reduzierung des Verbrauchs der Brennkraftmaschine wird im Wesentlichen dadurch erreicht, dass wegen geringerer Drosselverluste weniger Kraftstoff für eine Verbrennung ausreicht. Die Kraftstoffmenge ist dabei so weit reduziert, dass der Kraftstoff relativ präzise in Richtung auf die Zündkerze eingespritzt werden muss.

Je weniger Kraftstoff in den Brennraum eingespritzt wird, desto präziser muss die Einspritzung erfolgen, um eine gute Zündung und eine effektive Verbrennung des eingespritzten Kraftstoffes zu erreichen. Zudem besteht aufgrund der geringen eingespritzten Kraftstoffmenge die Gefahr, dass die Verbrennung des Kraftstoffes in einem kurzen Zeitraum erfolgt und dadurch eine Laufunruhe der Brennkraftmaschine erzeugt wird. Eine Laufunruhe der Brennkraftmaschine führt jedoch zu nachteiligen Drehmomentschwankungen am Drehmomentausgang der Brennkraftmaschine. Für eine angenehme und kontinuierliche Betriebsweise der Brennkraftmaschine ist es erforderlich, die Drehmomentschwankungen so weit wie möglich zu begrenzen.

Aus dem Stand der Technik ist es bereits bekannt, zur Reduzierung von Drehmomentschwankungen für einen Verbrennungsvorgang eines Zylinders nicht nur eine Einspritzung, sondern zwei Einspritzungen vorzunehmen. Die Aufteilung der einzuspritzenden Kraftstoffmenge in zwei Einspritzungen bietet den Vorteil, dass die für einen Verbrennungsvorgang eingespritzte Kraftstoffmenge in einem zeitlich längeren Intervall verbrennt und zu einem Drehmomentverlauf führt, der über dem Verbrennungsvorgang ein größeres mittleres Drehmoment aufweist, wobei maximal auftretende Drehmomentspitzen kleiner ausfallen.

Die DE 196 42 653 C1 beschreibt ein Verfahren zur Bildung eines zündfähigen Kraftstoff/Luft-Gemisches in einem Zylinder einer direkt einspritzenden Brennkraftmaschine. Der Einspritzwinkel ist der Öffnungswinkel eines Kegelstrahls und ist durch den Öffnungshub eines Ventilglieds in einer Öffnung bestimmt.

Die Aufgabe der Erfindung besteht darin, eine Verbesserung des Verfahrens zum direkten Einspritzen von Kraftstoff und eine verbesserte Steuereinrichtung zum Steuern eines Einspritzventils zum direkten Einspritzen von Kraftstoff bereitzustellen.

Die Aufgabe der Erfindung wird durch die Merkmale des Anspruchs 1 und durch die Merkmale des Anspruchs 11 gelöst.

Ein Vorteil der Erfindung gemäß dem Anspruch 1 besteht darin, dass eine größere Zündwahrscheinlichkeit des eingespritzten Kraftstoffes erreicht wird. Dieser Vorteil wird dadurch erreicht, dass der Kraftstoff der zwei Einspritzungen mit unterschiedlichen Einspritzwinkeln zur Zündeinrichtung eingespritzt wird. Somit weisen die während der zwei Einspritzungen eingespritzten Kraftstoffwolken unterschiedliche Abstände zur Zündeinrichtung auf, so dass wenigstens bei einer der zwei eingespritzten Kraftstoffwolken eine bessere Zündungswahrscheinlichkeit erreicht wird. Wird beispielsweise eine Laufunruhe der Brennkraftmaschine festgestellt, so wird zum Ausgleich der Laufunruhe eine Variation der Einspritzwinkel zwischen den zwei Einspritzungen eines Einspritzvorganges eines Zylinders durchgeführt. Damit kann zum einen ein schlechter Start der Verbrennung des eingespritzten Kraftstoffes ausgeglichen werden oder eine gleichmäßigere Verbrennung des eingespritzten Kraftstoffes erreicht werden. Beide Maßnahmen dienen der Verbesserung der Laufruhe der Brennkraftmaschine und führen somit zu einem insgesamt gleichmäßigeren Drehmomentverlauf am Drehmomentausgang der Brennkraftmaschine. Zudem kann mit diesen Maßnahmen auch die Qualität des Abgases verbessert werden.

Weitere vorteilhafte Ausführungsformen der Erfindung sind in den abhängigen Ansprüchen angegeben. In einer bevorzugten Ausführungsform wird der Kraftstoff bei einer zweiten Einspritzung, die einer ersten Einspritzung zeitlich folgt, näher in Richtung der Zündeinrichtung eingespritzt. Auf diese Weise wird die Situation verbessert, bei der nur eine mäßige Zündung der ersten eingespritzten Kraftstoffwolke aufgrund eines zu großen Abstandes zur Zündeinrichtung erfolgt. Dabei wird sichergestellt, dass wenigstens der bei der zweiten Einspritzung eingespritzte Kraftstoff nahe genug an die Zündeinrichtung gespritzt wird.

In einer einfachen Ausführungsform wird eine Anpassung des Einspritzwinkels der während der ersten und der zweiten Einspritzung eingespritzten Kraftstoffmengen dadurch erreicht, dass der Kraftstoff bei der zweiten Einspritzung mit einem größeren Einspritzwinkel in Bezug auf das Einspritzventil eingespritzt wird. Auf diese Weise wird ohne eine Änderung der Position des Einspritzventiles erreicht, dass die Kraftstoffmenge während der zweiten Einspritzung in einer festgelegten Winkelrichtung verändert eingespritzt wird. Diese Anwendung wird beispielsweise dann eingesetzt, wenn die Position des Einspritzventiles selbst nicht oder nur mit großem Aufwand verändert werden kann.

Versuche haben gezeigt, dass das erfindungsgemäße Verfahren bei Einspritzventilen mit einer Ventilnadel, die als Schließglied eine Einspritzöffnung steuert, eine unterschiedliche Ausbildung des Einspritzwinkels durch einen unterschiedlichen Hub der Ventilnadel erreicht wird. Die Ventilnadel liegt in einem Ruhezustand auf einem Nadelsitz auf, der einen Kraftstoffraum von der Einspritzöffnung trennt. Wird die Ventilnadel vom Ventilsitz abgehoben, so wird Kraftstoff aus dem Kraftstoffraum über das Einspritzventil abgegeben. Versuche haben gezeigt, dass der Kraftstoff mit einem größeren Abspritzwinkel in Bezug auf die Längsachse des Einspritzventiles abgegeben wird, wenn die Ventilnadel mit einem kleineren Hub vom Nadelsitz abgehoben wird. Somit ist es durch eine relativ einfach zu steuernde Variation des Nadelhubes möglich, den Einspritzwinkel des eingespritzten Kraftstoffes einzustellen.

Anstelle des Nadelhubes können aber auch andere Parameter wie z.B. der Kraftstoffdruck oder die Geschwindigkeit beim Abheben der Ventilnadel vom Nadelsitz variiert werden, um den Kraftstoff der ersten und der zweiten Einspritzung mit unterschiedlichen Einspritzwinkeln in den Brennraum abzugeben.

Das erfindungsgemäße Verfahren wird in Abhängigkeit von der Laufunruhe der Brennkraftmaschine eingesetzt. In einer einfachen Ausführungsform wird eine Laufunruhe der Brennkraftmaschine dadurch erkannt, dass ein Signal, das von der Laufunruhe der Brennkraftmaschine abhängt, mit einem Vergleichswert verglichen wird. Überschreitet das Signal den Vergleichswert, so wird der Einspritzwinkel der zwei Einspritzungen eines Verbrennungsvorganges eines Zylinders unterschiedlich eingestellt. Durch die Verwendung eines Vergleichswertes ist ein einfaches und schnell zu implementierendes Verfahren zur Steuerung der Einspritzung gegeben.

Vorzugsweise wird der Vergleichswert abhängig von der Drehzahl, der Abgasrückführrate oder dem Luftmassenstrom festgelegt. Auf diese Weise ist eine Anpassung an die Betriebsparameter der Brennkraftmaschine möglich. Damit wird insgesamt eine präzisere Verfahrensführung erreicht.

In Abhängigkeit von der Laufunruhe der Brennkraftmaschine ist es vorteilhaft, die Kraftstoffmenge für die erste und die zweite Einspritzung gleich groß zu wählen. Je nach Art der Laufunruhe kann es auch vorteilhaft sein, die Kraftstoffmengen für die erste und zweite Verbrennung unterschiedlich groß festzulegen. Vorzugsweise wird die Kraftstoffmenge für die zweite Einspritzung größer gewählt als die Kraftstoffmenge für die erste Einspritzung.

Ein verbessertes Verfahren zum Ausgleichen der Laufunruhe wird dadurch erreicht, dass die unterschiedlichen Einspritzwinkel, die während der ersten und der zweiten Einspritzung eingestellt werden, in einem Adaptionsverfahren geändert werden, wobei die unterschiedlichen Einspritzwinkel stufenweise verändert werden. Eine verbesserte Anpassung der Einspritzwinkel und damit eine verbesserte Beeinflussung der Laufunruhe wird dadurch erreicht, dass die Adaptionsgeschwindigkeit, mit der die Einspritzwinkel und/oder die Aufteilung der Kraftstoffmengen auf die erste und die zweite Einspritzung vorgenommen wird, abhängig von dem Luftmassenstrom, der Abgasrückführrate oder der Drehzahl der Brennkraftmaschine eingestellt wird.

Die Erfindung wird im Folgenden anhand der Figuren näher erläutert. Es zeigen
- Fig. 1: einen schematischen Aufbau einer Einspritzvorrichtung einer Brennkraftmaschine,
- Fig. 2: eine schematische Darstellung eines Brennraums mit Kraftstoffwolken, die mit unterschiedlichen Einspritzwinkeln abgegeben wurden und
- Fig. 3: ein Diagramm mit Hubhöhe für zwei Einspritzungen.

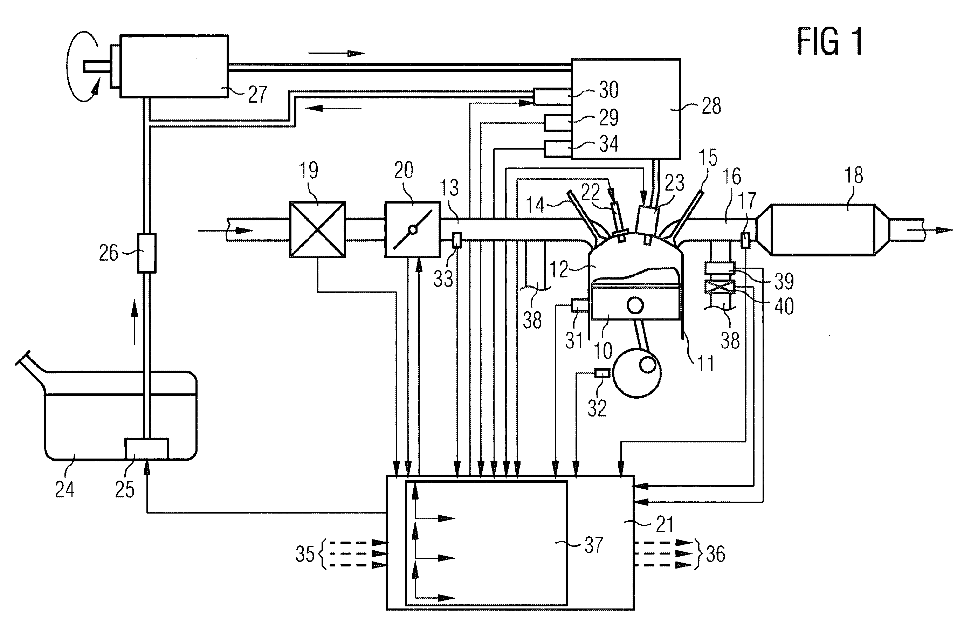

Fig. 1 zeigt in einer schematischen Darstellung eine Brennkraftmaschine mit einer Hochdruckspeichereinspritzung und einer Zündeinrichtung 22. Die Brennkraftmaschine weist mehrere Zylinder auf, wobei jedoch aus Gründen der Übersichtlichkeit nur ein Zylinder 11 dargestellt ist. Der Zylinder 11 weist einen Verbrennungsraum 12 auf, der von einem im Zylinder 11 beweglich geführten Kolben 10 begrenzt ist. Der Kolben 10 ist über eine Pleuelstange mit einer Kurbelwelle verbunden. Die Kurbelwelle steht mit einem Antriebsstrang in Verbindung. In den Verbrennungsraum 12 mündet ein Ansaugkanal 13, durch den gesteuert über ein Einlassventil 14 Luft in den Verbrennungsraum 12 strömt. Weiterhin weist der Zylinder 11 ein Auslassventil 15 auf, über das gesteuert Abgas vom Verbrennungsraum 12 in einen Abgaskanal 16 abgegeben wird. Im Abgaskanal 16 ist ein Sauerstoffsensor in Form einer breitbandigen Lambdasonde 17 angeordnet. Der Abgaskanal 16 mündet in einen NO_{X}-Speicherkatalysator 18. Der Speicherkatalysator 18 dient dazu, um in Betriebsbereichen mit einer mageren Verbrennung die geforderten Abgasgrenzwerte einhalten zu können. Dabei absorbiert der Speicherkatalysator 18 aufgrund seiner Beschichtung die bei magerer Verbrennung erzeugten NO_{X}-Verbindungen im Abgas.

Die zur Verbrennung im Zylinder notwendige Frischluft strömt über einen nicht dargestellten Luftfilter und einen Luftmassenmesser 19 in den Ansaugkanal 13. Im Ansaugkanal 13 ist eine Drosselklappe 20 angeordnet, mit der die bei einem Ansaugtakt des Kolbens 10 angesaugte Menge an Frischluft einstellbar ist. Die Drosselklappe 20 stellt ein elektromotorisch angesteuertes Drosselorgan (E-Gas) dar, dessen Öffnungsquerschnitt von einem Fahrerwunsch, d.h. von der Gaspedalstellung und vom Betriebsbereich der Brennkraftmaschine abhängt. Die Drosselklappe 20 steht mit einer Steuereinrichtung 21 in Verbindung, die die Stellung der Drosselklappe steuert. Mit der Drosselklappe lassen sich beispielsweise störende Lastwechselreaktionen des Fahrzeuges beim Gasgeben und Gaswegnehmen ebenso reduzieren wie Drehmomentsprünge beim Übergang vom Betrieb mit homogenem Gemisch zum Betrieb mit geschichteter Ladung und ungedrosseltem Luftweg. Zugleich wird zur Überwachung und Überprüfung ein Signal für die Stellung der Drosselklappe an die Steuereinrichtung 21 abgegeben.

In den Verbrennungsraum 12 ragt eine Zündeinrichtung 22 in Form einer Zündkerze und ein Einspritzventil 23. Über das Einspritzventil 23 wird gegen den Kompressionsdruck im Verbrennungsraum 12 Kraftstoff eingespritzt. Die Zündkerze 22 und das Einspritzventil 23 sind über Steuerleitungen mit der Steuereinrichtung 21 verbunden und werden von der Steuereinrichtung 21 gesteuert. Das Einspritzventil 23 steht über eine Zuleitung mit einem Hochdruckspeicher 28 in Verbindung. Der Hochdruckspeicher 28 wird aus einem Kraftstofftank 24 mit Kraftstoff versorgt. Der Kraftstoff wird aus dem Kraftstofftank 24 über eine Kraftstoffpumpe 25, einen Kraftstofffilter 26 und eine Hochdruckpumpe 27 mit Kraftstoff versorgt. Die Kraftstoffpumpe 25 fördert den Kraftstoff mit einem typischen Druck von 3,5 bar über das Kraftstofffilter 26 zur Hochdruckpumpe 27. Die Hochdruckpumpe 27 wird entweder mechanisch durch eine Kopplung mit der Kurbelwelle der Brennkraftmaschine oder elektrisch über einen Elektromotor angetrieben. Die Hochdruckpumpe 27 erhöht den Kraftstoffdruck auf einen typischen Wert von 100 bar, der im Hochdruckspeicher 28 herrscht. Der Druck im Hochdruckspeicher 28 wird durch einen Drucksensor 29 von der Steuereinrichtung 21 erfasst. Abhängig von dem Drucksignal wird der Druck im Hochdruckspeicher 28 entweder auf einen konstanten oder einen variablen Wert mittels eines Druckreglers 30 eingestellt. Der Hochdruckspeicher 28 ist über einen Druckregler 30 mit einer Rückführleitung an eine Kraftstoffleitung angeschlossen, die vom Kraftstofffilter 26 zur Hochdruckpumpe 27 führt.

Ein erster Temperatursensor 31 erfasst die Temperatur der Brennkraftmaschine beispielsweise über eine Messung der Kühlmitteltemperatur der Brennkraftmaschine. Die Drehzahl der Brennkraftmaschine wird mit Hilfe eines Sensors 32 erfasst, der Markierungen der Kurbelwelle oder Markierungen eines Geberrades abtastet, das von der Kurbelwelle angetrieben wird. Der Sensor 32 ist mit der Steuereinrichtung 21 über eine Signalleitung verbunden und gibt ein der Drehzahl der Kurbelwelle proportionales Signal an die Steuereinrichtung 21 weiter. Weiterhin ist ein Saugrohrdrucksensor 33 im Ansaugkanal 13 in Strömungsrichtung nach der Drosselklappe 20 angeordnet. Der Saugrohrdrucksensor 33 erfasst den Druck im Ansaugkanal 13 und meldet den Druck über eine Signalleitung an die Steuereinrichtung 21 weiter. Ebenso steht der Luftmassenmesser 19 über eine Signalleitung mit der Steuereinrichtung 21 in Verbindung und übermittelt ein Messsignal, das die angesaugte Luftmenge anzeigt.

Weitere Steuerparameter, die zum Betrieb der Brennkraftmaschine benötigt werden, wie beispielsweise die Gaspedalstellung, die Temperatur der Ansaugluft, die Drosselklappenstellung, Signale von Klopfsensoren, die Batteriespannung, eine Fahrdynamikanforderung usw. werden ebenfalls der Steuereinrichtung 21 als Betriebsparameter 35 zugeführt.

Die Steuereinrichtung 21 verfügt über einen Datenspeicher 37, in dem Kennfelder und Steuerungsprogramme abgelegt sind, die die Steuerungseinrichtung 21 zur Ansteuerung des Einspritzventils 23 verwendet. Dabei wird die Kraftstoffmenge für einen Verbrennungsvorgang eines Zylinders in Abhängigkeit von der Drehzahl, der Lufttemperatur, des Signals der Lambdasonde, des Drucks im Ansaugkanal und des Drucks im Hochdruckspeicher festgelegt. Zudem wird in Abhängigkeit von den genannten Betriebsparametern, die Dauer der Einspritzungen und die einzuspritzenden Kraftstoffmengen festgelegt.

Die Steuereinrichtung 21 ermittelt aufgrund der Drehzahl der Brennkraftmaschine, des Verlaufs des Drucks im Zylinder 11 oder des Verlaufs des Ionenstroms eine Laufunruhe der Brennkraftmaschine. Für die Überwachung des Zylinderdrucks ist ein Drucksensor im Brennraum angeordnet. Zum sicheren Erkennen einer Laufunruhe der Brennkraftmaschine wird wenigstens einer der erfassten Parameter Zylinderdruck, Ionenstrom oder Drehzahl mit einem Vergleichswert verglichen. Beispielsweise wird ein zeitlicher Mittelwert oder eine Schwankungsbreite des erfassten Parameters mit einem entsprechenden Vergleichswert verglichen. Ergibt der Vergleich mit dem Vergleichswert, dass eine Abweichung von dem Vergleichswert auftritt, so wird eine Laufunruhe der Brennkraftmaschine erkannt. Nach Erkennen der Laufunruhe steuert die Steuereinrichtung 21 das Einspritzventil 23 in der Weise an, dass die für einen Verbrennungsvorgang eines Zylinders 11 eingespritzte Kraftstoffmenge in Form von zwei nacheinander folgenden Einspritzungen eingespritzt wird. Zugleich werden die Einspritzwinkel, mit denen während der zwei Einspritzungen Kraftstoff in den Verbrennungsraum 12 eingespritzt wird, unterschiedlich eingestellt. In einer bevorzugten Ausführungsform wird während der ersten Einspritzung E1 Kraftstoff mit einem ersten Einspritzwinkel vom Einspritzventil 23 abgegeben. Während der zweiten Einspritzung E2 wird der Kraftstoff mit einem zweiten Einspritzwinkel vom Einspritzventil 23 abgegeben, wobei der zweite Einspritzwinkel näher in Richtung auf die Zündkerze 22 gerichtet ist.

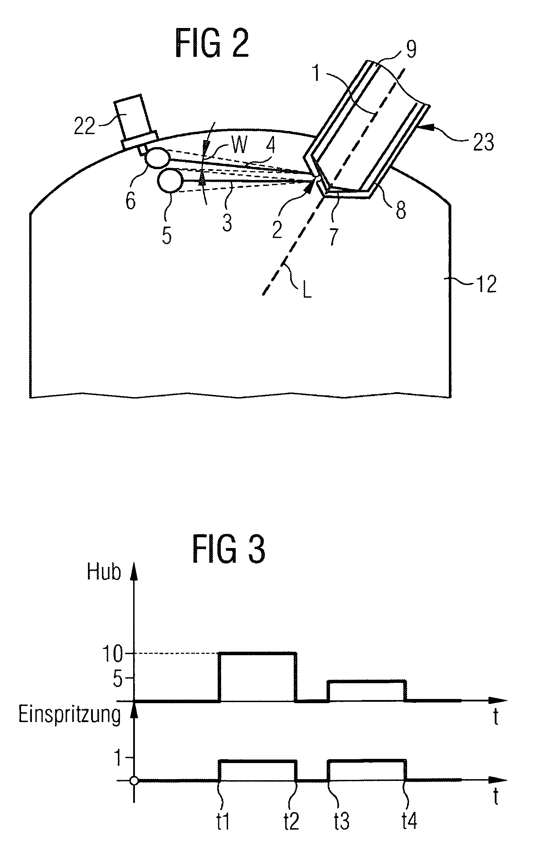

Fig. 2 zeigt eine schematische Darstellung der Situation, bei der während einer ersten Einspritzung E1 eine erste Kraftstoffwolke 5 mit einem ersten Einspritzwinkel 3 von einem Einspritzloch 2 des Einspritzventils 23 abgegeben wird. In der zeitlich folgenden zweiten Einspritzung E2 wird eine zweite Kraftstoffwolke 6 mit einem zweiten Einspritzwinkel 4 vom gleichen Einspritzloch 2 des Einspritzventils 23 abgegeben. Der Kraftstoff wird als Einspritzkegel mit einem Einspritzwinkelbereich W eingespritzt. Als Einspritzwinkel 3, 4 wird der Winkel bezeichnet, der der Mitte eines Einspritzkegels entspricht. Der Einspritzwinkel legt somit die Richtung der Mitte einer Kraftstoffwolke fest. Der erste und der zweite Einspritzwinkel 3, 4 sind in der Weise gewählt, dass die zweite Kraftstoffwolke 6 näher an die Zündkerze 22 gespritzt wird. Damit sind die Zündbedingungen für die zweite Kraftstoffwolke 6 besser als für die erste Kraftstoffwolke 5. Somit wird sichergestellt, dass wenigstens die zweite Kraftstoffwolke 6 sicher gezündet wird und damit auch der von der ersten Kraftstoffwolke 5 transportierte Kraftstoff noch in diesem Verbrennungsvorgang mitverbrannt wird.

Die unterschiedliche Einstellung der Einspritzwinkel 3, 4 kann auf verschiedene Weisen erfolgen. Beispielsweise ist es möglich, verschiedene Einspritzlöcher für die zwei unterschiedlichen Strahlrichtungen vorzusehen, die unabhängig voneinander von der Ventilnadel 1 freigegeben werden.

Je nach Betriebszustand der Brennkraftmaschine kann es auch vorteilhaft sein, bei der zweiten Einspritzung E2 die zweite Kraftstoffwolke 6 mit einem zweiten Einspritzwinkel abzugeben, der von der Zündkerze 22 einen größeren Abstand aufweist als der erste Einspritzwinkel der ersten Kraftstoffwolke 5. Wesentlich bei dem beschriebenen Verfahren ist, dass unterschiedliche Einspritzwinkel für die erste und die zweite Einspritzung eines Einspritzvorganges in Bezug auf die Zündeinrichtung gewählt werden können.

Je nach Ausführungsform kann auch der gesamte Einspritzwinkelbereich W, mit dem der Kraftstoff bei der zweiten Einspritzung E2 abgegeben wird, aufgeweitet werden im Vergleich zu dem Einspritzwinkelbereich W der ersten Einspritzung E1. Damit werden zumindestens Teile der zweiten Kraftstoffwolke 6 näher an die Zündeinrichtung 22 transportiert als mit der ersten Kraftstoffwolke 5. Somit wird auch in dieser Ausführungsform die Wahrscheinlichkeit für eine effiziente Zündung der zweiten Kraftstoffwolke erhöht. Entsprechendes gilt natürlich für die erste Kraftstoffwolke, wenn diese näher an die Zündeinrichtung 22 als die zweite Kraftstoffwolke bei der zweiten Einspritzung E2 abgegeben wird.

Die schematische Darstellung des Einspritzventiles 23 der Fig. 2 zeigt vorzugsweise ein piezobetriebenes Einspritzventil mit einer Ventilnadel 1, die einem Nadelsitz 7 zugeordnet ist. Der Nadelsitz 7 ist im unteren Bereich eines Ventilkörpers 8 und in Strömungsrichtung oberhalb des Einspritzloches 2 ausgebildet. In der geschlossenen Position des Einspritzventils 23 sitzt die Ventilnadel 1 auf dem Nadelsitz 7 auf. Damit ist ein Kraftstoffraum 9, der zwischen der Ventilnadel 1 und dem Ventilkörper 8 ausgebildet ist, von dem Einspritzloch 2 getrennt. Der Kraftstoffraum 9 wird von dem Hochdruckspeicher mit Kraftstoff versorgt. Wird nun über eine Betätigungseinrichtung, die nicht dargestellt ist, die Ventilnadel 1 vom Nadelsitz 7 abgehoben, so wird Kraftstoff aus dem Kraftstoffraum 9 über das Einspritzloch 2 in den Brennraum 12 abgegeben. Versuche haben gezeigt, dass der Einspritzwinkel, in dem Kraftstoff vom Einspritzloch 2 in den Brennraum 12 eingespritzt wird, in Abhängigkeit vom Hub der Ventilnadel 1 abhängt, wobei mit Hub die Höhenposition der Ventilnadel 1 bezeichnet ist, mit der die Ventilnadel 1 beim Öffnen des Einspritzloches 2 vom Nadelsitz 7 abgehoben wird. Die Abhängigkeit zwischen dem Hub der Ventilnadel 1 und den daraus folgenden Einspritzwinkeln wird experimentell für jeden Typ Einspritzventil ermittelt und in einem entsprechenden Kennfeld im Datenspeicher 37 abgelegt. Die Steuereinrichtung 21 kann durch die Vorgabe des Hubes der Ventilnadel 1 den Einspritzwinkel des eingespritzten Kraftstoffes einstellen. Versuche haben gezeigt, dass der Einspritzwinkel des eingespritzten Kraftstoffes um so weiter von der Längsachse L des Einspritzventils 23 ausgelenkt ist, je kleiner der Hub der Ventilnadel 1 ist. Soll somit in der gezeigten Darstellung der Fig. 2 eine erste Kraftstoffwolke 5 mit einem kleineren Winkel zur Längsachse L des Einspritzventils 23 abgegeben werden, so wird ein möglichst großer Hub der Ventilnadel 1 durch die Steuereinrichtung 21 vorgegeben. Der Hub der Ventilnadel wird je nach Ausführungsform des Einspritzventils 23 beispielsweise bei einem piezobetriebenen Einspritzventil über eine Stromsteuerung oder Spannungssteuerung eingestellt.

Soll eine zweite Kraftstoffwolke 6 mit einem größeren Winkel zur Längsachse L des Einspritzventils 23 und damit näher zur Zündkerze 22 abgegeben werden, so wird von der Steuereinrichtung 21 ein kleinerer Ventilhub als bei der vorhergehenden Einspritzung eingestellt. Dabei wird vorausgesetzt, dass die erste Kraftstoffwolke 5 unterhalb der Zündkerze 22 eingespritzt wurde und das Einspritzloch 2 unterhalb einer zur Zündkerze und senkrecht zur Längsachse L angeordneten Ebene angeordnet ist.

Fig. 3 zeigt schematisch die Einstellung des Hubes für die erste und zweite Einspritzung E1, E2. Im unteren Bereich des Diagramms ist ein Signal für den Öffnungszustand des Einspritzloches 2 dargestellt. Zum Zeitpunkt T1 wird das Einspritzloch 2 geöffnet und zum Zeitpunkt T2 wieder geschlossen. Über dieser Darstellung ist der Hub der Ventilnadel 1 dargestellt, der während der ersten Einspritzung E1 einen Wert von 10 aufweist. Die zweite Einspritzung beginnt zum Zeitpunkt T3 und endet zum Zeitpunkt T4. Während der zweiten Einspritzung weist der Hub der Ventilnadel 1 nur einen Wert von 5 auf. Den unterschiedlichen Hüben der Ventilnadel 1 entsprechen unterschiedliche Einspritzwinkel.

In einer bevorzugten Ausführungsform wird der Vergleichswert, mit dem das Signal für die Laufunruhe der Brennkraftmaschine verglichen wird, in Abhängigkeit von der Drehzahl und/oder der Abgasrückführrate und/oder dem Luftmassenstrom festgelegt. Dazu ist ein entsprechendes Kennfeld im Datenspeicher 37 abgelegt.

Der Abgaskanal 16 ist über einen Rückkanal 38 mit dem Ansaugkanal 13 verbunden. Im Rückkanal 38 ist ein Ventil 39 und ein zweiter Luftmassenmesser 40 vorgesehen. Das Ventil 39 und der zweite Luftmassenmesser 40 sind mit der Steuereinrichtung 21 über Leitungen verbunden. Die Steuereinrichtung 21 steuert den Öffnungsquerschnitt des Ventils 39 und legt damit die rückgeführte Abgasmenge fest. Gleichzeitig wird die rückgeführte Abgasmenge vom zweiten Luftmassenmesser 40 erfasst und an die Steuereinrichtung 21 weitergemeldet.

In einer bevorzugten Ausführungsform wird die Kraftstoffmenge, die während der ersten Einspritzung E1 und während der zweiten Einspritzung E2 für einen Verbrennungsvorgang eingesetzt werden, gleich groß eingestellt. Je nach Ausführungsform der Laufunruhe kann es vorteilhaft sein, die während der zweiten Einspritzung E2 abgegebene Kraftstoffmenge größer oder kleiner zu wählen als die Kraftstoffmenge, die während der ersten Einspritzung E1 eingespritzt wird. Die gesamte in einem Verbrennungsvorgang in einen Zylinder einzuspritzende Kraftstoffmenge und die Aufteilung der Kraftstoffmengen auf die erste und die zweite Einspritzung sind in Abhängigkeit von Betriebsparametern der Brennkraftmaschine festgelegt und in entsprechenden Kennfeldern im Datenspeicher 37 abgelegt.

Vorzugsweise wird die Differenz zwischen dem ersten Einspritzwinkel, der für die erste Einspritzung verwendet wird und dem zweiten Einspritzwinkel, der für die zweite Einspritzung verwendet wird, stufenweise vergrößert bzw. verkleinert. Die Vergrößerung bzw. die Verkleinerung der Einspritzwinkel wird in Form eines Adaptionsverfahrens durchgeführt, wobei der zweite Einspritzwinkel bei auftretender Laufunruhe stufenweise vergrößert wird, bis die Laufunruhe einen vorgegebenen Wert unterschreitet. Die Anzahl der Stufen, in denen der zweite Einspritzwinkel verändert wird und die Zeitdauer, während der der zweite Einspritzwinkel auf einer Stufe verharrt, wird vorzugsweise in Abhängigkeit von dem Frischluftmassenstrom, der Abgasrückführrate oder der Drehzahl festgelegt. Dazu ist ein entsprechendes Kennfeld im Datenspeicher 37 abgelegt. Durch die Anpassung des Adaptionsverfahrens an die genannten Betriebsparameter wird eine präzise, schadstoffarme und Kraftstoff sparende Steuerung der Einspritzung erreicht.

Eine weitere Verbesserung der Laufruhe wird dadurch erreicht, dass das Ende der zweiten Einspritzung zu einem späteren Kurbelwellenwinkel verschoben wird. Die gesamte Einspritzung wird dabei ausgehend vom Ende der zweiten Einspritzung zeitlich festgelegt. Anstelle der zwei Einspritzungen kann auch eine größere Anzahl von Einspritzungen für einen Verbrennungsvorgang verwendet werden.

Das beschriebene Verfahren bietet sich insbesondere an, um Hubunterschiede zwischen den Einspritzventilen über eine entsprechende Steuerung der einzelnen Einspritzventile auszugleichen.

In einer weiteren Ausführungsform der Erfindung werden die unterschiedlichen Einspritzwinkel der zwei Einspritzungen in Abhängigkeit von der Abgasqualität festgelegt. Die Abgasqualität wird von der Steuereinrichtung 21 mit Hilfe der Lambdasonde überwacht. Entspricht das zylinderindividuelle λ-Verhältnis des Abgases nicht einem gewünschten Wert, so wird eine entsprechende Anpassung der Abgasqualität durch eine Veränderung der Verbrennungsbedingungen des Zylinders erreicht, indem die Einspritzwinkel und/oder die Kraftstoffmengen der ersten und zweiten Einspritzung E1, E2 verändert werden. Vorzugsweise ist eine Aufteilung der Kraftstoffmengen auf die erste oder zweite Einspritzung in Abhängigkeit vom Luftmassenstrom und/oder von der Abgasrückführrate und/oder der Drehzahl abgelegt. Dazu sind entsprechende Kennfelder im Datenspeicher 37 abgelegt, die einen Zusammenhang zwischen dem λ-Wert des Abgases und den zwei Einspritzwinkeln 3, 4 und/oder den Kraftstoffmengen der zwei Einspritzungen festlegen.

## Patentansprüche

1. Verfahren zum direkten Einspritzen von Kraftstoff mit einem Einspritzventil (23) in einen Verbrennungsraum (12) einer Brennkraftmaschine mit einer Zündeinrichtung (22), wobei für einen Verbrennungsvorgang zwei Einspritzungen abgegeben werden, und wobei ein Signal zur Feststellung einer Laufunruhe der Brennkraftmaschine erfasst wird,
**dadurch gekennzeichnet, dass**
der Kraftstoff vom Einspritzventil (23) bei den zwei Einspritzungen in unterschiedlichen Einspritzwinkeln zur Zündeinrichtung (22) eingespritzt wird,
und dass abhängig von dem Signal die Einspritzwinkel (3, 4) der zwei Einspritzungen unterschiedlich eingestellt werden.

2. Verfahren nach Anspruch 1, **dadurch gekennzeichnet, dass** das Einspritzventil (23) Kraftstoff bei der zweiten Einspritzung im Vergleich zur ersten Einspritzung näher zur Zündeinrichtung (22) einspritzt.

3. Verfahren nach einem der Ansprüche 1 oder 2, **dadurch gekennzeichnet, dass** das Einspritzventil (23) den Kraftstoff bei den zwei Einspritzungen mit unterschiedlichen Einspritzwinkelbereichen (W) einspritzt.

4. Verfahren nach einem der Ansprüche 1 bis 3, **dadurch gekennzeichnet,**
**dass** das Einspritzventil (23) eine betätigbare Ventilnadel (1) aufweist,
**dass** die Ventilnadel (1) einem Nadelsitz (7) zugeordnet ist,
**dass** die Ventilnadel (1) als Schießglied zum Öffnen oder Schließen einer Einspritzöffnung (2) vorgesehen ist,
**dass** zum Einspritzen von Kraftstoff die Ventilnadel (1) mit einem vorgegebenen Hub vom Ventilsitz (7) abgehoben wird, und **dass** zur unterschiedlichen Ausbildung des Einspritzwinkels der zwei Einspritzungen der Hub der Ventilnadel (1) unterschiedlich groß eingestellt wird.

5. Verfahren nach Anspruch 4, **dadurch gekennzeichnet, dass** der Nadelhub für einen größeren Einspritzwinkel in Bezug auf eine Längsachse (L) des Einspritzventils (23) kleiner ausgebildet wird.

6. Verfahren nach einem der Ansprüche 1 bis 5, **dadurch gekennzeichnet, dass** das Signal mit einem Vergleichswert verglichen wird, und dass der Einspritzwinkel (3, 4) der zwei Einspritzungen unterschiedlich eingestellt wird, wenn das Signal den Vergleichswert überschreitet.

7. Verfahren nach Anspruch 6, **dadurch gekennzeichnet, dass** der Vergleichswert abhängig von der Drehzahl oder/und der Abgasrückführrate oder/und dem Luftmassenstrom festgelegt wird.

8. Verfahren nach einem der Ansprüche 1 bis 7, **dadurch gekennzeichnet, dass** die Kraftstoffmenge für die erste und zweite Einspritzung gleich groß gewählt wird.

9. Verfahren nach einem der Ansprüche 1 bis 7, **dadurch gekennzeichnet, dass** die Kraftstoffmenge für die zweite Einspritzung unterschiedlich zu der Kraftstoffmenge der ersten Einspritzung gewählt wird.

10. Verfahren nach einem der Ansprüche 1 bis 9, **dadurch gekennzeichnet,**
**dass** die unterschiedlichen Einspritzwinkel (3, 4) der zwei Einspritzungen in einem Adaptionsverfahren geändert werden, um eine Drehmomentstabilisierung des Antriebsstanges
der Brennkraftmaschine oder/und eine Abgasverbesserung zu erhalten, und
**dass** die Adaptionsgeschwindigkeit, mit der die Einspritzwinkel und/oder die Aufteilung der Kraftstoffmenge auf die erste und zweite Einspritzung variiert werden, abhängig von dem Luftmassenstrom oder/und der Abgasrückführrate oder/und der Drehzahl eingestellt wird.

11. Steuereinrichtung (21) zum Steuern eines Einspritzventils (23) zum direkten Einspritzen von Kraftstoff in einen Verbrennungsraum (12) einer Brennkraftmaschine mit einer Zündeinrichtung (22), mit einem Sensor (32) zur Erfassung einer Laufunruhe der Brennkraftmaschine, wobei die Steuereinrichtung (21) die Laufunruhe der Brennkraftmaschine überwacht und das Einspritzventil (23) zum Durchführen zweier Einspritzungen für einen Verbrennungsvorgang ansteuert, um die Laufunruhe auszugleichen
**dadurch gekennzeichnet,**
**dass** die Steuereinrichtung (21) das Einspritzventil (23) durch Variation des Nadelhubes oder durch Variation des Kraftstoffdrucks oder durch Variation der Geschwindigkeit beim Abheben der Ventilnadel (1) vom Nadelsitz (7) in der Weise ansteuert, dass der Kraftstoff abhängig von der Laufunruhe bei den zwei Einspritzungen in unterschiedlichen Einspritzwinkeln (3, 4) zur Zündeinrichtung (22) vom Einspritzventil (23) eingespritzt wird.

## Claims

1. Process for direct fuel injection with an injection valve (23) into the combustion chamber (12) of an internal combustion engine with an ignition device (22), whereby two injections are released for a combustion process and whereby a signal is recorded in order to determine an uneven running of the internal combustion engine,
**characterized in that**, the fuel is injected by the injection valve (23) in the form of two injections at different injection angles to the ignition device (22), and that depending on the signal, the injection angles (3, 4) of the two injections are adjusted differently.

2. Process in accordance with claim 1, **characterized in that**, compared with the first injection the injection valve (23) injects fuel more closely to the ignition device (22) in the case of the second injection.

3. Process in accordance with one of the claims 1 or 2,
**characterized in that** the injection valve (23) injects the fuel in the form of two injections at different injection angle sectors (W).

4. Process in accordance with one of the claims 1 to 3, **characterized in that**,
the injection valve (23) has a needle valve (1) which can be actuated,
a needle seat (7) is allocated to the needle valve (1), the needle valve (1) is provided in the form of a closing member for opening or closing an injection opening (2), for the injection of fuel, the needle valve (1) is lifted with a specified lift from the valve seat (7), and that for the different embodiment of the injection angle of the two injections, the lift of the needle valve (1) can be adjusted in such a way that the one differs from the other.

5. Process in accordance with claim 4, **characterized in that** the lift of the needle for a larger injection angle with reference to the longitudinal axis (L) of the injection valve (23) is embodied smaller.

6. Process in accordance with one of the claims 1 to 5, **characterized in that** the signal is compared to a comparative value and that the injection angles (3, 4) of the two injections are adjusted differently if the signal exceeds the comparative value.

7. Process in accordance with claim 6, **characterized in that** the comparative value is set depending on the rotational speed and/or the return rate of the exhaust gas and/or the mass air flow.

8. Process in accordance with one of the claims 1 to 7, **characterized in that** the amounts of fuel for the first and the second injection are selected in such a way that the amounts are equal.

9. Process in accordance with one of the claims 1 to 7, **characterized in that** the amount of fuel for the second injection is selected in such a way that it is not equal to the amount of fuel of the first injection.

10. Process in accordance with one of the claims 1 to 9, **characterized in that**,
the different injection angles (3, 4) of the two injections are changed in an adaptation process in order to stabilize the torque of the drive train of the internal combustion engine and/or to improve the exhaust gas and that the adaptation rate by means of which the injection angles and/or the division of the amount of fuel into the first and the second injection is varied, is set depending on the mass air flow and/or the return rate of the exhaust gas and/or the rotational speed.

11. Control device (21) for controlling an injection valve (23) for direct fuel injection into the combustion chamber (12) of an internal combustion engine with an ignition device (22), with a sensor (32) for recording an uneven running of the internal combustion engine, in which case the control device (21) monitors the uneven running of an internal combustion engine and activates the injection valve (23) for performing two injections for a combustion process in order to compensate for the uneven running
**characterized in that**,
the control device (21) activates the injection valve (23) by varying the lift of the needle or by varying the fuel pressure or by varying the speed when lifting the needle valve (1) from the needle seat (7) in such a way that the fuel, depending on the uneven running is injected in the form of two injections by the injection valve (23) at different injection angles (3, 4) to the ignition device (22).

## Revendications

1. Procédé d'injection directe de carburant avec une soupape d'injection (23) dans une chambre de combustion (12) d'un moteur à combustion interne muni d'un dispositif d'allumage (22), deux injections étant délivrées pendant un cycle de combustion et un signal destiné à déterminer un raté du moteur à combustion interne étant acquis, **caractérisé en ce que** le carburant est injecté par la soupape d'injection (23) avec des angles d'injection différents vers le dispositif d'allumage (22) lors des deux injections et que les angles d'injection (3, 4) des deux injections sont réglés différemment en fonction du signal.

2. Procédé selon la revendication 1, **caractérisé en ce que** lors de la deuxième injection, la soupape d'injection (23) injecte du carburant plus près du dispositif d'allumage (22) que lors de la première injection.

3. Procédé selon l'une des revendications 1 ou 2, **caractérisé en ce que** la soupape d'injection (23) injecte du carburant avec des plages d'angles d'injection (W) différentes lors des deux injections.

4. Procédé selon l'une des revendications 1 à 3, **caractérisé en ce que** la soupape d'injection (23) présente un pointeau de soupape (1) commandable, qu'un siège de pointeau (7) est affecté au pointeau de soupape (1), que le pointeau de soupape (1) est prévu comme élément de fermeture pour ouvrir ou fermer un orifice d'injection (2), que pour l'injection du carburant, le pointeau de soupape (1) est soulevé du siège de soupape (7) d'une course prédéfinie et que la course du pointeau de soupape (1) est réglé à des valeurs différentes en vue de former des angles d'injection différents des deux injections.

5. Procédé selon la revendication 4, **caractérisé en ce que** la course du pointeau est configurée plus petite pour un angle d'injection plus grand par rapport à un axe longitudinal (L) de la soupape d'injection (23).

6. Procédé selon l'une des revendications 1 à 5, **caractérisé en ce que** le signal est comparé avec une valeur de comparaison et que l'angle d'injection (3, 4) des deux injections est réglé différemment lorsque le signal dépasse la valeur de comparaison.

7. Procédé selon la revendication 6, **caractérisé en ce que** la valeur de comparaison est définie en fonction de la vitesse de rotation et/ou du taux de réinjection des gaz d'échappement et/ou du débit massique de l'air.

8. Procédé selon l'une des revendications 1 à 7, **caractérisé en ce que** la quantité de carburant est choisie à la même valeur pour la première et la deuxième injections.

9. Procédé selon l'une des revendications 1 à 7, **caractérisé en ce que** la quantité de carburant pour la deuxième injection est choisie différente de la quantité de carburant pour la première injection.

10. Procédé selon l'une des revendications 1 à 9, **caractérisé en ce que** les différents angles d'injection (3, 4) des deux injections sont modifiés dans un procédé d'adaptation afin d'obtenir une stabilisation du couple de la chaîne de transmission du moteur à combustion interne et/ou une amélioration des gaz d'échappement, que la vitesse d'adaptation à laquelle est modifié l'angle d'injection et/ou la distribution de la quantité de carburant sur la première et la deuxième injections est réglée en fonction du débit massique d'air et/ou du taux de réinjection des gaz d'échappement et/ou de la vitesse de rotation.

11. Dispositif de commande (21) pour commander une soupape d'injection (23) pour l'injection directe de carburant dans une chambre de combustion (12) d'un moteur à combustion interne muni d'un dispositif d'allumage (22), muni d'un capteur (32) pour détecter un raté du moteur à combustion interne, le dispositif de commande (21) surveillant le raté du moteur à combustion interne et commandant la soupape d'injection (23) de manière à effectuer deux injections pendant un cycle de combustion afin de compenser le raté, **caractérisé en ce que** le dispositif de commande (21) commande la soupape d'injection (23) en faisant varier la course du pointeau ou en faisant varier la pression du carburant ou en faisant varier la vitesse de soulèvement du pointeau de soupape (1) du siège de pointeau (7) de telle sorte que le carburant est injecté par la soupape d'injection (23) en fonction du raté selon des angles d'injection (3, 4) différents par rapport au dispositif d'allumage (22) lors des deux injections.
